# EUROPÄISCHE PATENTSCHRIFT

(11) **EP 3 033 536 B1**
(45) Veröffentlichungstag und Bekanntmachung des Hinweises auf die Patenterteilung: **12.09.2018**
(21) Anmeldenummer: 14741796.8
(22) Anmeldetag: 02.07.2014
(51) Int. Cl.: B23Q 1/52

(54) **RUNDTISCHVORRICHTUNG EINER WERKZEUGMASCHINE**
MACHINE TOOL TURNTABLE ARRANGEMENT
ENSEMBLE DE TABLE TOURNANTE DE MACHINE-OUTIL

(30) Priorität: 13.08.2013 DE 102013215962
(43) Veröffentlichungstag der Anmeldung: 22.06.2016
(73) Patentinhaber: Schaeffler Technologies AG & Co. KG, 91074 Herzogenaurach (DE)
(72) Erfinder: HESTERMANN, Jörg-Oliver, 91086 Aurachtal (DE)
(86) Internationale Anmeldenummer: PCT/DE2014/200294
(87) Internationale Veröffentlichungsnummer: WO 2015/021965

(56) Entgegenhaltungen:
- WO-A1-2012/158974
- CN-U- 202 348 965
- DE-A1- 10 010 295
- DE-A1- 19 734 134

## Beschreibung

### Gebiet der Erfindung

Die Erfindung betrifft eine Rundtischvorrichtung einer Werkzeugmaschine, umfassend ein feststehendes Gestell und einen Rundtisch, der mittels eines mit einer Wälzlagerung ausgebildeten Rundtischlagers gegenüber dem Gestell verdrehbar und axial fest gelagert ist. Eine Rundtischvorrichtung ist aus der CN 202348965 U bekannt.

### Hintergrund der Erfindung

Rundtische werden beispielsweise in der spanenden und nicht spanenden Bearbeitung zur Aufspannung von Werkstoffen in Werkzeugmaschinen und in der Automatisierung von Produktionsabläufen eingesetzt. Hierbei dreht der Rundtisch in einem Gestell. Aufgrund von hohen Traglastanforderungen und Genauigkeit der Rotation des Rundtisches gegenüber dem Gestell werden zumeist getrennt ausgebildete Wälzlagerungen mit einem Axial- und Radiallageranteil eingesetzt. Zumeist kommen für eine Rundtischlagerung Radial-Axialzylinderrollenlager, zweireihige Schrägrollenlager, zweireihige Axial-Schrägkugellager oder Kreuzrollenlager zur Anwendung. Beispielsweise sind aus der DE 100 10 295 A1 und der DE 10 2007 023 242 A1 derartige Wälzlagerungen bekannt. Hierbei ist die Tragfähigkeit auf einen Punkt- beziehungsweise Linienkontakt zwischen den Wälzkörpern und den Laufbahnen der Lagerringe beschränkt, so dass bei vorgegebener Traglast eine entsprechende Tragzahl mit vergleichsweise großen Wälzkörperdurchmessern vorgehalten werden muss, so dass die Wälzlagerung einen hohen Bauraum beansprucht.

### Aufgabe der Erfindung

Ausgehend vom bestehenden Stand der Technik besteht die Aufgabe der Erfindung in einer vorteilhaften Weiterbildung der Wälzlagerung einer Rundtischvorrichtung, insbesondere vor dem Hintergrund einer hohen Traglast bei geringem Bauraum.

### Beschreibung der Erfindung

Erfindungsgemäß wird die Aufgabe durch den Gegenstand des unabhängigen Patentanspruchs 1 gelöst. Die von diesem Anspruch abhängigen Unteransprüche geben vorteilhafte Ausführungsformen wieder.

Die vorgeschlagene Rundtischvorrichtung umfasst ein feststehendes Gestell und einen Rundtisch, der mittels eines mit einer Wälzlagerung ausgebildeten Rundtischlagers gegenüber dem Gestell verdrehbar und axial fest gelagert ist. Diese Wälzlagerung ist aus einem einzigen Planetenwälzlager mit jeweils einem dem Gestell und dem Rundtisch zugeordneten, vorzugsweise einteiligen Lagerring mit einteilig in die Lagerringe eingebrachte oder aus separaten Bauteilen hergestellten, in die Lagerringe eingelegten und befestigten Rillenprofilen gebildet. Über den Umfang verteilt zwischen den Lagerringen sind Planetenwälzkörper mit einem zu den Rillenprofilen komplementären Außenprofil eingebracht. Durch Kämmen der Rillenprofile der Lagerringe mit den Außenprofilen der Planetenwälzkörper wird eine axial fest und radial verdrehbare Lagerung gebildet, bei der eine Vielzahl von Tragflächen, nämlich im Wesentlichen eine der Anzahl der Rillen der Außenprofile entsprechende Anzahl von Tragflächen zwischen den Lagerringen gebildet, so dass das Rundtischlager bei hoher Tragzahl klein bauend ausgebildet werden kann. Weiterhin kann ein einziges Wälzlager im Sinne eines Rillenkugellagers mit wesentlich verbesserter Tragzahl vorgesehen sein, um den Rundtisch gegenüber dem Gestell verdrehbar und axial fest zu lagern.

Durch eine Anordnung der Drehachsen der Planetenwälzkörper parallel zu einer Drehachse des Rundtischs übernehmen die Außenprofile der Planetenwälzkörper in Verbindung mit den Rillenprofilen der Lagerringe die axiale Traglast, während die Verdrehung des Rundtischs gegenüber dem Gestell durch Abwälzen der Außenprofile in den Rillenprofilen erfolgt. Die Lagerringe können dabei im Wesentlichen radial übereinander liegend in einer Ebene angeordnet sein. Je nach Ausführungsform kann ein Lageraußenring an dem Gestell und ein Lagerinnenring an dem Rundtisch angeordnet, beispielsweise verschraubt sein. In speziellen Ausführungsformen, beispielsweise bei das Gestell radial überragendem Rundtisch können der Lageraußenring auch mit dem Rundtisch und der Lagerinnenring mit dem Gestell verbunden sein.

Im einfachsten Fall kann eine einzige Reihe über den Umfang verteilter Planetenwälzkörper vorgesehen sein. Hierbei kann ein geringes Axialspiel innerhalb einer Verzahnung der Rillenprofile mit den Außenprofilen der Planetenwälzkörper zugelassen werden. Im Falle einer einzustellenden Spielfreiheit kann die Verzahnung entsprechend ausgelegt sein. Alternativ oder zusätzlich können in den Rillenprofilen eines oder beider Lagerringe und/oder in dem Außenprofil der Planetenwälzkörper entsprechend einer vorgegebenen Funktion Steigungsfehler vorgesehen sein, die die Lagerringe gegeneinander axial vorspannen. Insbesondere zur Erhöhung der Tragfähigkeit und der Verbesserung der koaxialen Genauigkeit können mehrere, bevorzugt zwei Reihen über den Umfang verteilter Planetenwälzkörper axial nebeneinander angeordnet sein. Zur Ausbildung einer axialen Vorspannung der Lagerringe können hierbei neben dem genannten Steigungsfehler die Rillenprofile zumindest zweier Reihen der Planetenwälzkörper einen geringen axialen Versatz gegeneinander aufweisen.

Um beispielsweise Drehkennwerte des Rundtischlagers zu erfassen, kann zwischen den beiden Reihen von Planetenwälzkörpern eine Messeinrichtung vorgesehen sein. Beispielsweise kann in dem feststehenden Lagerring ein Sensorelement vorgesehen sein, das zwischen den Reihen der Planetenwälzkörper angeordnete Gebermarkierungen erfasst und aus diesen die Drehzahl, Drehgeschwindigkeit, Drehbeschleunigung und entsprechende Drehkennwerte erfasst.

Die Montage des Rundtischlagers erfolgt vorteilhafterweise bei einer außermittigen Anordnung der Lagerringe durch axiales Einfügen der Planetenwälzkörper zwischen die Lagerringe am größten radialen Abstand der Lagerringe mit nachfolgendem Vereinzeln der Planetenwälzkörper auf einen vorgesehenen gleichmäßigen Abstand. Die Planentenwälzrollen werden bevorzugt mittels eines Käfigs in ihrer Position gehalten, hierzu kann der Käfig aus zwei Käfigteilen gebildet sein, die axial beidseitig beispielsweise auf beidseitig an den Stirnseiten der Planetenwälzkörper angeformten Zapfen aufgebracht werden und anschließend miteinander verclipst, verrastet oder in anderer Weise verbunden werden. Die Verbindung kann durch Gegenhalten der Käfigteile beispielsweise an einer oder mehreren zur Einführung von Schmiermittel dienenden Schmierbohrungen erfolgen. Die Käfigteile können zudem beidseitig an den Stirnseiten der Lagerringe zwischen diese als Abdichtungen dienen beziehungsweise Abdichtungen aufweisen.

Gemäß einem alternativen Verfahren zur Einbringung der Planetenwälzkörper kann in zumindest einem der Lagerringe ein bevorzugt axial eingebrachter Füllkanal mit einem zumindest geringfügig größeren Durchmesser als einem Außendurchmesser der Planetenwälzkörper radial beabstandet zu einem Teilkreis der montierten Planetenwälzkörper vorgesehen sein, durch den die Planetenwälzkörper axial nacheinander zwischen die Lagerringe eingebracht werden und von radial außen durch einen Radialöffnung auf dem Teilkreis platziert werden. Hierbei wird nach jeder Einbringung eines Planetenwälzkörpers der andere, nicht mit dem Füllkanal versehene Lagerring weitergedreht. Die Hierdurch lassen sich hohe Füllgrade bis zu einer nahezu vollrolligen Befüllung der Lagerringe mit Planetenrollen und damit gesteigerte Tragfähigkeiten umsetzen. Der Füllkanal und/oder die Radialöffnung können als Bohrung vorgesehen sein, die das entsprechende Rillenprofil eines Lagerrings durchschneidet. Die Radialöffnung wird mittels eines Füllstopfens verschlossen, der an seiner Innenseite das fehlende Rillenprofil der Bohrung im Wesentlichen formtreu und lückenlos fortsetzt. Hierzu kann während der Einbringung des Rillenprofils der Füllstopfen bereits in seine spätere Endposition eingebracht sein, so dass das Rillenprofil kontinuierlich in den Lagerring und den Füllstopfen eingebracht wird. In dem Füllstopfen kann eine Schmierbohrung integriert sein. Durch den Füllkanal können des Weiteren die Planetenwälzkörper in Umfangsrichtung beabstandete Abstandsteile abwechselnd mit den Planetenwälzkörpern eingebracht werden.

### Kurze Beschreibung der Zeichnungen

Die Erfindung wird nachfolgend anhand eines bevorzugten Ausführungsbeispiels unter Bezugnahme auf die beigefügten Zeichnungen näher erläutert. Dabei zeigen:
- Figur 1: eine Teilansicht durch ein Rundtischlager mit einem Planetenwälzlager,
- Figur 2: einen Teilschnitt durch das Rundtischlager der Figur 1,
- Figur 3: ein mittels eines Füllkanals befülltes Rundtischlager in Teilansicht,
- Figur 4: einen Teilschnitt durch ein Rundtischlager mit einem zweireihigen Planetenwälzlager, und
- Figur 5: einen Teilschnitt durch ein Rundtischlager mit einem zweireihigen Planetenwälzlager und einer zwischen den Reihen angeordneten Messeinrichtung.

### Ausführliche Beschreibung der Zeichnungen

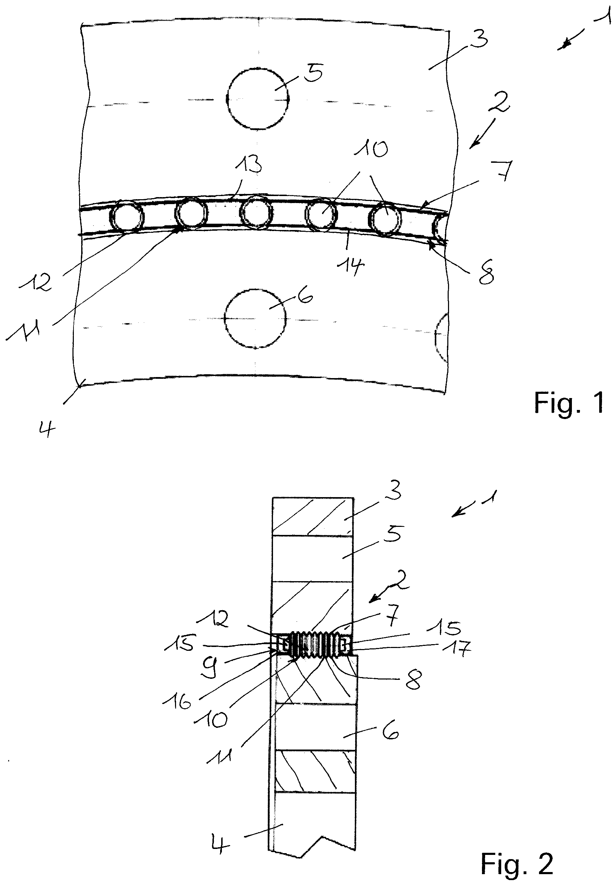

Die Figuren 1 und 2 zeigen in Teilansicht beziehungsweise im Teilschnitt das Rundtischlager 1 mit einer als Planetenwälzlager 2 ausgebildeten Wälzlagerung. Das Planetenwälzlager 2 enthält die beiden einteilig ausgebildeten, radial übereinander ausgebildeten Lagerringe 3, 4, die mittels der Befestigungsöffnungen 5, 6 an einem Gestell beziehungsweise an einem Rundtisch einer nicht näher dargestellten Rundtischvorrichtung aufgenommen sind. Die Lagerringe 3, 4 weisen jeweils eine aus den Rillenprofilen 7, 8 gebildete Laufbahn für die gleichmäßig über den Umfang verteilten, mittels des Käfigs 9 dort beabstandet zu einander gehaltenen Planetenwälzkörper 10 auf. Die Planetenwälzkörper 10 kämmen mit ihren Außenprofilen 11 mit den Rillenprofilen 7, 8 und bilden damit eine verstärkte axiale Tragstruktur, indem sich die einzelnen Rillen 12, 13, 14 der Rillenprofile 7, 8 einerseits und der Außenprofile 11 andererseits axial abstützen. Die Lagerringe 3, 4 sind gegeneinander geringfügig, beispielsweise um eine Rille 12, 13, 14 versetzt, so dass diese jeweils plan an dem Gestell und dem Rundtisch unter Einstellung eines Axialspiels im überlappenden Zustand zwischen diesen aufgenommen werden können. In dem gezeigten Ausführungsbeispiel können der als Lageraußenring ausgebildete Lagerring 3 an dem Gestell und der als Lagerinnenring ausgebildete Lagerring 4 an dem Rundtisch aufgenommen sein. Der Rundtisch kann dabei das Gestell mit Axialspiel radial zumindest teilweise übergreifen.

An den Planetenwälzkörpern 10 ist beidseitig jeweils ein Zapfen 15 angeformt, der der Aufnahme in dem aus den Käfigteilen 16, 17 gebildeten Käfig dient. Die Planetenwälzkörper 10 werden bei außermittig angeordneten Lagerringen 3, 4 an dem weitesten Abstand dieser nacheinander eingefügt und auf den vorgegebenen Abstand vereinzelt. Danach werden die Käfigteile 16, 17 von beiden Seiten auf die Zapfen 15 aufgeschoben und die Käfigteile miteinander verbunden. Die Käfigteile 16, 17 bilden zwischen den Planetenwälzkörpern 10 Freiräume wie Taschen aus, in denen Schmiermittel untergebracht ist. Die Stirnseiten der Käfigteile 16, 17 können über den Umfang geschlossene Abdichtungen zwischen den Lagerringen 3, 4 bilden.

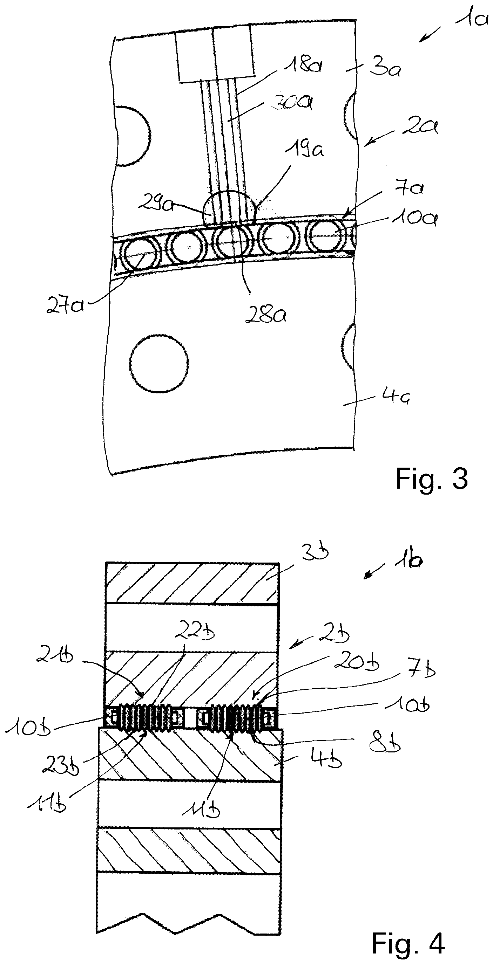

Die Figur 3 zeigt eine Teilansicht eines gegenüber dem Rundtischlager 1 der Figur 1 leicht abgeänderten Rundtischlagers 1a als Planetenwälzlager 2a. Im Unterschied zu dem Rundtischlager1 ist bei dem Rundtischlager 1a eine Befüllung der Lagerringe 3a, 4a mittels des Einfuhrkanals 19a vorgesehen, der hier in dem als Außenlagering ausgebildeten Lagerring 3a axial unter Anschnitt des Rillenprofils 7a beispielsweise als Bohrung eingebracht ist. Der Einfuhrkanal 19a wird nach der Montage der Planetenwälzkörper 10a mittels des Füllstopfens 29a verschlossen. Die beispielsweise als Bohrung ausgebildete Radialöffnung 18a enthält den Spannstift 30a, der der Sicherung des Füllstopfens 29a oder/und der Schmierung über diese Radialöffnung 18a mittels einer entsprechenden Schmierbohrung dient. Der Einfuhrkanal 19a ist so ausgeführt, dass die Öffnung beziehungsweise der Durchbruch für die Planetenwälzkörper 10a zu den Rillenprofilen 7a größer ist als deren Durchmesser. Hierbei werden die Planetenwälzkörper 10a nacheinander unter Verdrehen des Lagerrings 4a über den Einfuhrkanal 19a auf den Teilkreis 27a eingebracht. Einen Abstand zwischen den einzelnen Planetenwälzkörpern 10a übernehmen beispielsweise nicht dargestellte Abstandsteile oder Zwischenteile, die wechselweise mit den Planetenwälzkörpern 10a durch den Einfuhrkanal 19a eingebracht werden. Die Abstandsteile können eine Dichtwirkung zwischen den Lagerringen 3a, 4a ausfüllen, so dass Schmiermittel nicht entweichen kann. Die im Rillenprofil 7a im Bereich des Einfuhrkanals 19a fehlende Lücke 28a wird mittels des Füllstopfens 29a verschlossen, der über den radialen Sicherungsstift 18a in seiner Position gesichert wird. Dieser Sicherungsstift 18a kann auch so ausgebildet sein, dass er zum Nachschmieren verwendet werden kann. Zur Darstellung des die Lücke 28a füllenden Rillenprofils am Einfuhrkanal 19a wird der Füllstopfen 29a vor der Herstellung des Rillenprofils 7a in den Einfuhrkanal 19a eingebracht und gesichert und dann gemeinsam mit dem Lagerring 3a bearbeitet, so dass eine formtreue und im Wesentlichen lückenlose Abbildung des Rillenprofils an dem Einfüllstopfen erzielt werden kann.

Die Figur 4 zeigt das gegenüber den Rundtischlagern 1, 1a der Figuren 1 bis 3 abgeänderte Rundtischlager 1b mit dem zweireihig ausgebildeten Planetenwälzlager 2b. Die beiden Reihen 20b, 21b von bevorzugt als Gleichteile ausgebildeten Planetenwälzkörpern 10b sind axial zueinander beabstandet. Jede Reihe weist an den Lagerringen 3b, 4b separat ausgebildete Rillenprofile 7b, 8b, 22b, 23b für die Außenprofile 11b der Planetenwälzkörper 10b auf. Die Rillenprofile 7b, 8b, der Reihe 20b und die Rillenprofile 22b, 23b der Reihe 21b können bezüglich ihrer Rillen axial leicht gegeneinander verlagert sein, so dass die Planetenwälzkörper gegeneinander axial vorgespannt sind und das Planetenwälzlager 2b eine axial spielfreie Lagerung des Rundtischs auf dem Gestell ermöglicht.

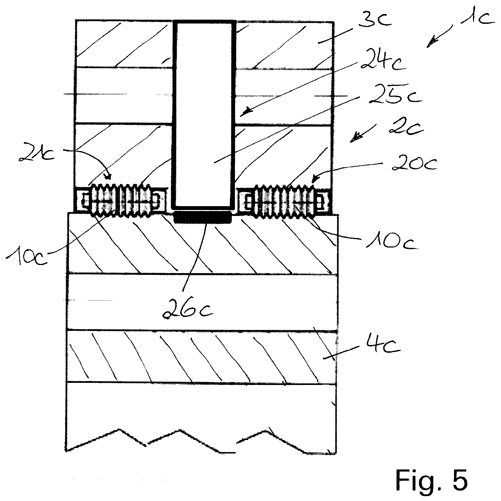

Die Figur 5 zeigt in Abänderung zu dem Rundtischlager 1b der Figur 4 das Rundtischlager 1c im Teilschnitt. Hierbei ist axial zwischen den Reihen 20c, 21c der Planetenwälzkörper 10c des Planetenwälzlagers 2c die Messeinrichtung 24c angeordnet. Die Messeinrichtung 24c enthält das in dem fest in dem Gestell angeordneten Lagerring 3c zwischen den Reihen 20c, 21c untergebrachte Sensorelement 25c, welches Erregersignale infolge des auf dem drehenden Lagerring 4c angeordneten, beispielsweise magnetische Markierungen enthaltenden Geberring 26c erzeugt. Aus den Erregersignalen werden in einer nachgeschalteten Auswerteeinrichtung, beispielsweise einem Steuergerät Drehkennwerte des Rundtischs, beispielsweise Drehzahl, Drehgeschwindigkeit, Drehbeschleunigung, Gleichlauf und dergleichen bestimmt.

**Bezugszeichenliste**

| | | | |
|---|---|---|---|
| 1 | Rundtischlager | 13 | Rille |
| 1a | Rundtischlager | 14 | Rille |
| 1b | Rundtischlager | 15 | Zapfen |
| 1c | Rundtischlager | 16 | Käfigteil |
| 2 | Planetenwälzlager | 17 | Käfigteil |
| 2a | Planetenwälzlager | 18a | Radialöffnung |
| 2b | Planetenwälzlager | 19a | Einfuhrkanal |
| 2c | Planetenwälzlager | 20b | Reihe |
| 3 | Lagerring | 20c | Reihe |
| 3a | Lagerring | 21b | Reihe |
| 3b | Lagerring | 21c | Reihe |
| 3c | Lagerring | 22b | Rillenprofil |
| 4 | Lagerring | 23b | Rillenprofil |
| 4a | Lagerring | 24c | Messeinrichtung |
| 4b | Lagerring | 25c | Sensorelement |
| 4c | Lagerring | 26c | Geberring |
| 5 | Befestigungsöffnung | 27a | Teilkreis |
| 6 | Befestigungsöffnung | 28a | Lücke |
| 7 | Rillenprofil | 29a | Füllstopfen |
| 7a | Rillenprofil | 30a | Spannstift |
| 7b | Rillenprofil | | |
| 8 | Rillenprofil | | |
| 8b | Rillenprofil | | |
| 9 | Käfig | | |
| 10 | Planetenwälzkörper | | |
| 10a | Planetenwälzkörper | | |
| 10b | Planetenwälzkörper | | |
| 10c | Planetenwälzkörper | | |
| 11 | Außenprofil | | |
| 11b | Außenprofil | | |
| 12 | Rille | | |

## Patentansprüche

1. Rundtischvorrichtung einer Werkzeugmaschine, umfassend ein feststehendes Gestell und einen Rundtisch, der mittels eines mit einer Wälzlagerung ausgebildeten Rundtischlagers (1, 1a, 1b, 1c) gegenüber dem Gestell verdrehbar und axial fest gelagert ist, wobei die Wälzlagerung aus einem einzigen Planetenwälzlager (2, 2a, 2b, 2c) mit jeweils einem dem Gestell und dem Rundtisch zugeordneten Lagerring (3, 3a, 3b, 3c, 4, 4a, 4b, 4c) mit Rillenprofilen (7, 7a, 7b, 8, 8b) und über den Umfang verteilt angeordneten Planetenwälzkörpern (10, 10a, 10b, 10c) mit einem zu den Rillenprofilen (7, 7a, 7b, 8, 8b) komplementären Außenprofil (11, 11b) gebildet ist.

2. Rundtischvorrichtung nach Anspruch 1, **dadurch gekennzeichnet, dass** Drehachsen der Planetenwälzkörper (10, 10a, 10b, 10c) des Rundtischlagers (1, 1a, 1b, 1c) parallel zu einer Drehachse des Rundtischs angeordnet sind.

3. Rundtischvorrichtung nach Anspruch 1 oder 2, **dadurch gekennzeichnet, dass** bei dem Rundtischlager (1b, 1c) mehrere Reihen (20b, 20c, 21b, 21c) über den Umfang verteilter Planetenwälzkörper (10b, 10c) axial nebeneinander angeordnet sind.

4. Rundtischvorrichtung nach Anspruch 3, **dadurch gekennzeichnet, dass** das Rundtischlager (1b, 1c) zwei Reihen Planetenwälzkörper (10b, 10c) aufweist und beide Reihen (20b, 20c, 21b, 21c) an den Rillenprofilen (7b, 8b) der Lagerringe (3b, 3c, 4b, 4c) axial gegeneinander vorgespannt sind.

5. Rundtischvorrichtung nach einem der Ansprüche 1 bis 4, **dadurch gekennzeichnet, dass** in einem der Lagerringe (3a) des Rundtischlagers (1a) ein axial verlaufender Einfuhrkanal (19a) radial beabstandet zu einem Teilkreis (27a) der montierten Planetenwälzkörper (10a) und eine den Einfuhrkanal (19a) schneidende Radialöffnung (18a) vorgesehen ist, wobei der Einfuhrkanal (19a) mittels eines Füllstopfens (29a) verschlossen und mittels eines in der Radialbohrung (18a) aufgenommenen Spannstifts (30a) fixiert ist.

6. Rundtischvorrichtung nach Anspruch 4, **dadurch gekennzeichnet, dass** zwischen den beiden Reihen (20c, 21c) des Rundtischlagers (1c) eine Messeinrichtung (24c) vorgesehen ist.

7. Rundtischvorrichtung nach einem der Ansprüche 1 bis 6, **dadurch gekennzeichnet, dass** zwischen den Planetenwälzkörpern (10a) des Rundtischlagers (1a) in Umfangsrichtung Abstandsteile vorgesehen sind.

8. Rundtischvorrichtung nach einem der Ansprüche 1 bis 7, **dadurch gekennzeichnet, dass** die Planetenwälzkörper (10, 10b, 10c) des Rundtischlagers (1, 1b, 1c) mittels endseitiger Zapfen (15) in einem Käfig (9) aufgenommen sind.

9. Rundtischvorrichtung nach Anspruch 8, **dadurch gekennzeichnet, dass** der Käfig (9) des Rundtischlagers (1, 1b, 1c) aus zwei Käfigteilen (16, 17) gebildet ist, welche jeweils von einer Seite der Planetenwälzkörper (10, 10b, 10c) auf die Zapfen (15) aufgebracht und miteinander verrastet sind.

10. Rundtischvorrichtung nach einem Anspruch 8 oder 9, **dadurch gekennzeichnet, dass** der Käfig (9) des Rundtischlagers (1, 1b, 1c) axial beidseitig eine Abdichtung zwischen den Lagerringen (3, 3b, 3c, 4, 4b, 4c) bildet.

## Claims

1. Rotary-table apparatus of a machine tool, comprising a fixed frame and a rotary table which is mounted in an axially fixed and rotatable manner with respect to the frame by means of a rotary-table bearing (1, 1a, 1b, 1c) formed with a roller bearing assembly, wherein the roller bearing assembly is formed from a single planetary roller bearing (2, 2a, 2b, 2c) with in each case one bearing ring (3, 3a, 3b, 3c, 4, 4a, 4b, 4c), which is assigned to the frame and to the rotary table and which has grooved profiles (7, 7a, 7b, 8, 8b), and with planetary rolling elements (10, 10a, 10b, 10c), which are arranged in a manner distributed around the circumference and which have an external profile (11, 11b) complementary to the grooved profiles (7, 7a, 7b, 8, 8b).

2. Rotary-table apparatus according to Claim 1, **characterized in that** the axes of rotation of the planetary rolling elements (10, 10a, 10b, 10c) of the rotary-table bearing (1, 1a, 1b, 1c) are arranged parallel to an axis of rotation of the rotary table.

3. Rotary-table apparatus according to Claim 1 or 2, **characterized in that**, in the rotary-table bearing (1b, 1c), a plurality of rows (20b, 20c, 21b, 21c) of planetary rolling elements (10b, 10c) distributed around the circumference are arranged axially alongside one another.

4. Rotary-table apparatus according to Claim 3, **characterized in that** the rotary-table bearing (1b, 1c) has two rows of planetary rolling elements (10b, 10c) and both rows (20b, 20c, 21b, 21c) are preloaded axially with respect to one another at the grooved profiles (7b, 8b) of the bearing rings (3b, 3c, 4b, 4c).

5. Rotary-table apparatus according to one of Claims 1 to 4, **characterized in that**, in one of the bearing rings (3a) of the rotary-table bearing (1a), an axially extending introduction channel (19a) is provided in a manner radially spaced apart from a pitch circle (27a) of the mounted planetary rolling elements (10a), and a radial opening (18a) intersecting the introduction channel (19a) is provided, wherein the introduction channel (19a) is closed by means of a filling plug (29a) and is fixed by means of a clamping pin (30a) received in the radial bore (18a).

6. Rotary-table apparatus according to Claim 4, **characterized in that** a measuring device (24c) is provided between the two rows (20c, 21c) of the rotary-table bearing (1c).

7. Rotary-table apparatus according to one of Claims 1 to 6, **characterized in that** spacers are provided in the circumferential direction between the planetary rolling elements (10a) of the rotary-table bearing (1a).

8. Rotary-table apparatus according to one of Claims 1 to 7, **characterized in that** the planetary rolling elements (10, 10b, 10c) of the rotary-table bearing (1, 1b, 1c) are accommodated in a cage (9) by means of end-side journals (15).

9. Rotary-table apparatus according to Claim 8, **characterized in that** the cage (9) of the rotary-table bearing (1, 1b, 1c) is formed from two cage parts (16, 17) which are each applied to the journals (15) from one side of the planetary rolling elements (10, 10b, 10c) and latched together.

10. Rotary-table apparatus according to either of Claims 8 and 9, **characterized in that** the cage (9) of the rotary-table bearing (1, 1b, 1c) forms a seal axially on both sides between the bearing rings (3, 3b, 3c, 4, 4b, 4c).

## Revendications

1. Ensemble de table tournante de machine-outil, comprenant un bâti immobile et une table tournante, qui est montée au moyen d'un palier de table tournante (1, 1a, 1b, 1c) formé par un palier à roulement de façon rotative par rapport au bâti et axialement fixe, dans lequel le palier à roulement est formé par un seul palier à roulement planétaire (2, 2a, 2b, 2c) respectivement avec un anneau de palier (3, 3a, 3b, 3c, 4, 4a, 4b, 4c) associé au bâti et à la table tournante et présentant des profils rainurés (7, 7a, 7b, 8, 8b) et des corps de roulement planétaires (10, 10a, 10b, 10c) disposés de façon répartie sur la périphérie qui présentent un profil extérieur (11, 11b) complémentaire aux profils rainurés (7, 7a, 7b, 8, 8b).

2. Ensemble de table tournante selon la revendication 1, **caractérisé en ce que** des axes de rotation des corps de roulement planétaires (10, 10a, 10b, 10c) du palier de table tournante (1, 1a, 1b, 1c) sont disposés parallèlement à un axe de rotation de la table tournante.

3. Ensemble de table tournante selon la revendication 1 ou 2, **caractérisé en ce que** plusieurs rangées (20b, 20c, 21b, 21c) de corps de roulement planétaires (10b, 10c) répartis sur la périphérie sont disposées axialement l'une à côté de l'autre dans le palier de table tournante (1b, 1c).

4. Ensemble de table tournante selon la revendication 3, **caractérisé en ce que** le palier de table tournante (1b, 1c) présente deux rangées de corps de roulement planétaires (10b, 10c) et les deux rangées (20b, 20c, 21b, 21c) sont précontraintes axialement l'une contre l'autre sur les profils rainurés (7b, 8b) des anneaux de palier (3b, 3c, 4b, 4c).

5. Ensemble de table tournante selon l'une quelconque des revendications 1 à 4, **caractérisé en ce qu'**un canal d'introduction axial (19a) est, dans un des anneaux de palier (3a) du palier de table tournante (la), radialement espacé d'un cercle primitif (27a) des corps de roulement planétaires montés (10a) et il est prévu une ouverture radiale (18a) coupant le canal d'introduction (19a), dans lequel le canal d'introduction (19a) est fermé au moyen d'un bouchon de remplissage (29a) et est fixé au moyen d'une tige de serrage (30a) logée dans l'alésage radial (18a).

6. Ensemble de table tournante selon la revendication 4, **caractérisé en ce qu'**il est prévu un dispositif de mesure (24c) entre les deux rangées (20c, 21c) du palier de table tournante (1c).

7. Ensemble de table tournante selon l'une quelconque des revendications 1 à 6, **caractérisé en ce qu'**il est prévu des pièces d'écartement en direction périphérique entre les corps de roulement planétaires (10a) du palier de table tournante (la).

8. Ensemble de table tournante selon l'une quelconque des revendications 1 à 7, **caractérisé en ce que** les corps de roulement planétaires (10, 10b, 10c) du palier de table tournante (1, 1b, 1c) sont logés dans une cage (9) au moyen de tourillons d'extrémité (15).

9. Ensemble de table tournante selon la revendication 8, **caractérisé en ce que** la cage (9) du palier de table tournante (1, 1b, 1c) est formée de deux parties de cage (16, 17), qui sont appliquées respectivement par un côté des corps de roulement planétaires (10, 10b, 10c) sur les tourillons (15) et sont encliquetées l'une avec l'autre.

10. Ensemble de table tournante selon l'une des revendications 8 ou 9, **caractérisé en ce que** la cage (9) du palier de table tournante (1, 1b, 1c) forme axialement de part et d'autre un joint d'étanchéité entre les anneaux de palier (3, 3b, 3c, 4, 4b, 4c).
